# EUROPEAN PATENT APPLICATION

(11) **EP 4 589 541 A1**
(43) Date of publication of application: **23.07.2025**
(21) Application number: 23865262.2
(22) Date of filing: 29.08.2023
(51) Int. Cl.: G06T 13/40

(54) **PROGRAM, INFORMATION PROCESSING METHOD, AND INFORMATION PROCESSING DEVICE**

(30) Priority: 14.09.2022 JP 2022145898
(71) Applicant: Sony Group Corporation, Tokyo 108-0075 (JP)
(72) Inventor: NISHIO, Takaaki, Tokyo 108-0075 (JP); ISHII, Satoru, Tokyo 108-0075 (JP); MATSUI, Akira, Tokyo 108-0075 (JP)
(74) Representative: D Young & Co LLP
(86) International application number: PCT/JP2023/031091
(87) International publication number: WO 2024/057905

(57) **Abstract**

The present disclosure relates to a program, an information processing method, and an information processing device capable of reducing user's labor for CG video production.

A program to which the technology according to the present disclosure causes a computer to execute processing of selecting at least one of object data expressing a three-dimensional model corresponding to a subject of an input reference image or motion data related to movement of the three-dimensional model, the object data and the motion data being accumulated in a database, on a basis of meta information of the input reference image. The technology according to the present disclosure can be applied to, for example, video production software for producing a 3DCG video.

## Description

### TECHNICAL FIELD

The present disclosure relates to a program, an information processing method, and an information processing device, and more particularly to a program, an information processing method, and an information processing device for enabling reduction of user's labor for CG video production.

### BACKGROUND ART

Conventionally, a method of automating a part of processes in video production has been proposed.

For example, Patent Document 1 discloses a method for automatically generating a video program according to a script, the method including analyzing text from the script using natural language processing to find an indexed media asset and assemble the video program.

### CITATION LIST

### PATENT DOCUMENT

Patent Document 1: Japanese Patent Application Laid-Open No. 2019-195156

### SUMMARY OF THE INVENTION

### PROBLEMS TO BE SOLVED BY THE INVENTION

Meanwhile, in each process of producing a computer graphics (CG) video, manual setting and adjustment by a user is necessary for a three-dimensional model (3D model) and an entire scene, which takes time and effort.

The present disclosure has been made in view of such a situation, and an object of the present disclosure is to enable reduction of user's labor for CG video production.

### SOLUTIONS TO PROBLEMS

A program according to the present disclosure is a program for causing a computer to execute processing including: selecting at least one of object data expressing a three-dimensional model corresponding to a subject of an input reference image or motion data related to movement of the three-dimensional model, the object data and the motion data being accumulated in a database, on the basis of meta information of the input reference image.

An information processing method according to the present disclosure is an information processing method of selecting at least one of object data expressing a three-dimensional model corresponding to a subject of an input reference image or motion data related to movement of the three-dimensional model, the object data and the motion data being accumulated in a database, on the basis of meta information of the input reference image.

An information processing device according to the present disclosure is an information processing device including: an automatic selection unit configured to select at least one of object data expressing a three-dimensional model corresponding to a subject of an input reference image or motion data related to movement of the three-dimensional model, the object data and the motion data being accumulated in a database, on the basis of meta information of the input reference image.

In the present disclosure, at least one of object data expressing a three-dimensional model corresponding to a subject of an input reference image or motion data related to movement of the three-dimensional model, the object data and the motion data being accumulated in a database, is selected on the basis of meta information of the input reference image.

### BRIEF DESCRIPTION OF DRAWINGS

Fig. 1 is a diagram illustrating a flow of conventional CG video production.
Fig. 2 is a table illustrating an example of setting items in a material process.
Fig. 3 is diagrams for describing a lighting process.
Fig. 4 is a table illustrating an example of setting items in the lighting process.
Fig. 5 is a diagram illustrating a flow of CG video production to which the technology according to the present disclosure is applied.
Fig. 6 is a diagram illustrating a schematic configuration example of a video production system.
Fig. 7 is a block diagram illustrating a functional configuration example of the video production system.
Fig. 8 is a table illustrating an example of feature information of a subject.
Fig. 9 is diagrams illustrating an example of extraction of movement information and center of gravity information.
Fig. 10 is a diagram illustrating an example of a GUI provided by video production software.
Fig. 11 is a flowchart for describing 3D model generation processing.
Fig. 12 is a diagram illustrating a first specific example of 3D model generation.
Fig. 13 is a diagram illustrating a second specific example of 3D model generation.
Fig. 14 is a diagram illustrating a configuration example of a computer.

### MODE FOR CARRYING OUT THE INVENTION

Hereinafter, modes for carrying out the present disclosure (hereinafter referred to as embodiments) will be described. Note that the description is given in the following order.

1. Flow of conventional CG video production and problems thereof
2. Flow of CG video production to which technology according to present disclosure is applied
3. Configuration and operation of video production system
4. Specific example of 3D model generation
5. Configuration example of computer

### <1. Flow of conventional CG video production and problems thereof>

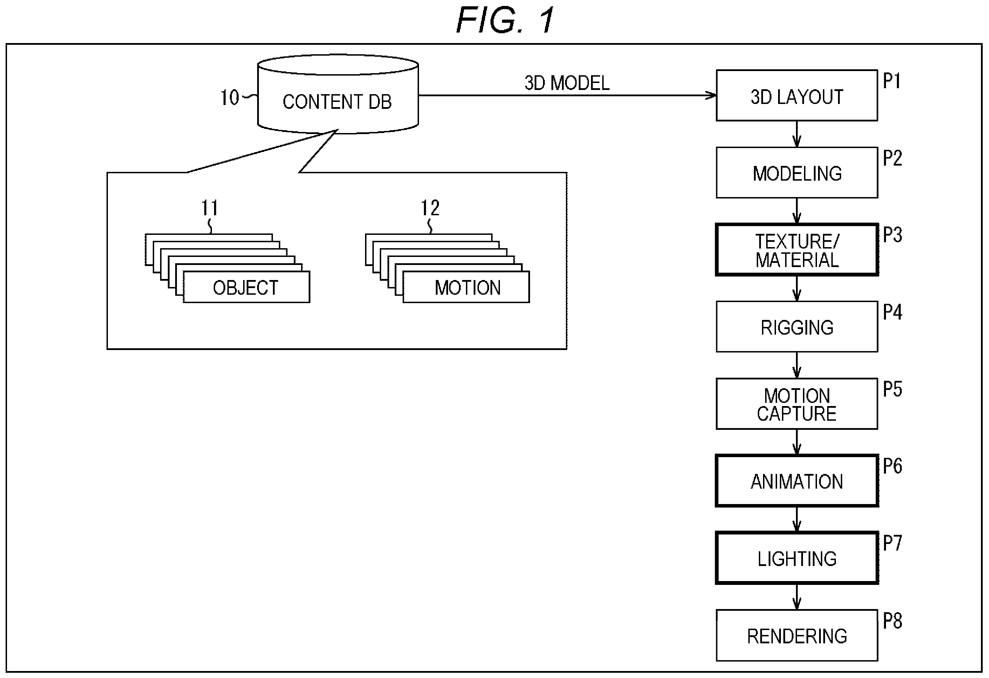

Fig. 1 is a diagram illustrating a flow of conventional CG video production.

Here, an example in which a user (producer) produces a 3DCG video using video production software will be described. The user purchases a three-dimensional model (3D model) as an asset necessary for producing the 3DCG video in a marketplace accessible from the video production software, and can produce the 3DCG video through a plurality of production processes. The present example is not limited thereto, and the user can also produce the 3DCG video using assets (3D models) accumulated in a database (DB) owned by the user.

As illustrated in Fig. 1, in a content DB 10, object data 11 for expressing a 3D model that is available for purchase in the marketplace and motion data 12 regarding movement of the 3D model are accumulated.

The object data 11 is data for expressing a 3D model corresponding to an object existing in a real space, such as a vehicle such as a car or a motorcycle, a wall or a room of a building, a stationary object such as topography or soil, or a moving object such as a human, an animal, or the above-described vehicle.

The motion data 12 is data for moving the object data 11 expressing the moving object such as a human or an animal, and is also called "rig" or the like. The motion data 12 expressing basic skeleton and motion of the 3D model may be included in the object data 11. For example, the object data 11 of "dog" may include the motion data 12 expressing basic motions such as "run", "sit", and "stand".

Furthermore, the motion data 12 corresponding to the object data 11 (suitable for the object data 11) may be available for purchase separately from the object data 11. In this case, for example, the 3D model of a running dog can be generated by combining the object data 11 of the "dog" with the motion data 12 expressing "run".

The user manually selects the object data 11 and the motion data 12 for expressing the desired 3D model from the content DB 10 (marketplace), and can generate the desired 3D model through the production processes indicated by processes P1 to P8.

The object data 11 and the motion data 12 include various kinds of meta information, and in each of the processes P1 to P8, a plurality of setting items corresponding to the meta information included in the object data 11 and the motion data 12 is set and adjusted by the user.

The process P1 is a 3D layout process of setting time and weather of a scene in a 3DCG space, arrangement and movement of the 3D model, camerawork, and the like.

The process P2 is a modeling process of forming the 3D model in the 3DCG space. In a case where the object data 11 expressing the desired 3D model is prepared, the modeling process may be omitted.

The process P3 is texture/material processes of setting a surface and texture of the 3D model. Specifically, in the texture process, an image file for expressing the texture of the 3D model surface is selected. In the material process, the texture (surface material) is set for the 3D model surface.

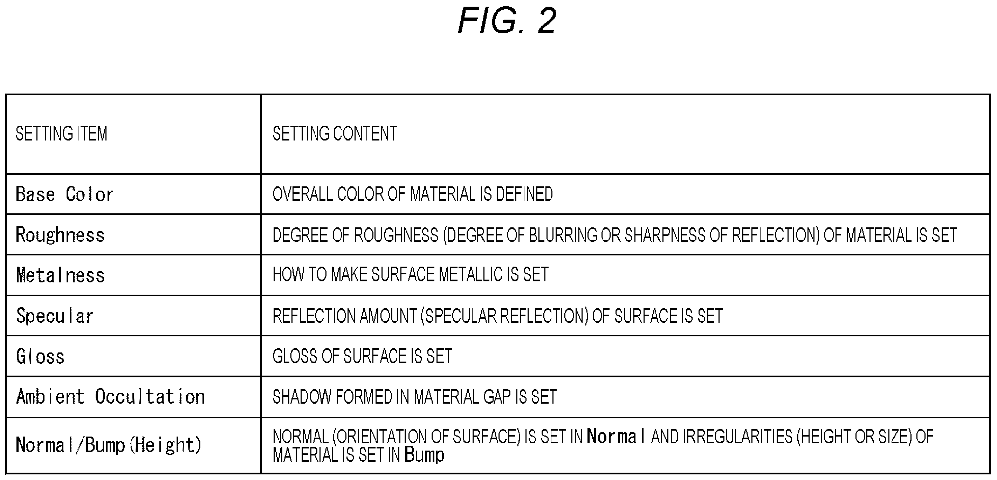

In the material process, for example, setting items as illustrated in Fig. 2 are set.

That is, in the material process, seven setting items are set, which include base color, roughness, metalness, specular, gloss, ambient occultation, and normal/bump (height).

The base color is an item that defines an overall color of the material. The roughness is an item for setting a degree of roughness (degree of blurring or sharpness of reflection) of the material. The metalness is an item for setting how to make the surface metallic. The specular is an item for setting a reflection amount (specular reflection) of the surface. The gloss is an item for setting gloss of the surface. The ambient occultation is an item for setting a shadow formed in a material gap. Among the normal/bump (height), the normal is an item for setting a normal (orientation of a surface), and the bump is an item for setting irregularities (height or size) of the material.

Returning to Fig. 1, the process P4 is a rigging process of performing setting for causing the 3D model to move. In a case where the motion data 12 expressing the desired movement of the 3D model is prepared, the rigging process may be omitted.

The process P5 is a motion capture process of capturing movement of a real human or animal as three-dimensional data.

The process P6 is an animation process of setting the movement, a center of gravity, and the like of the 3D model on the basis of results of the rigging process and the motion capture process.

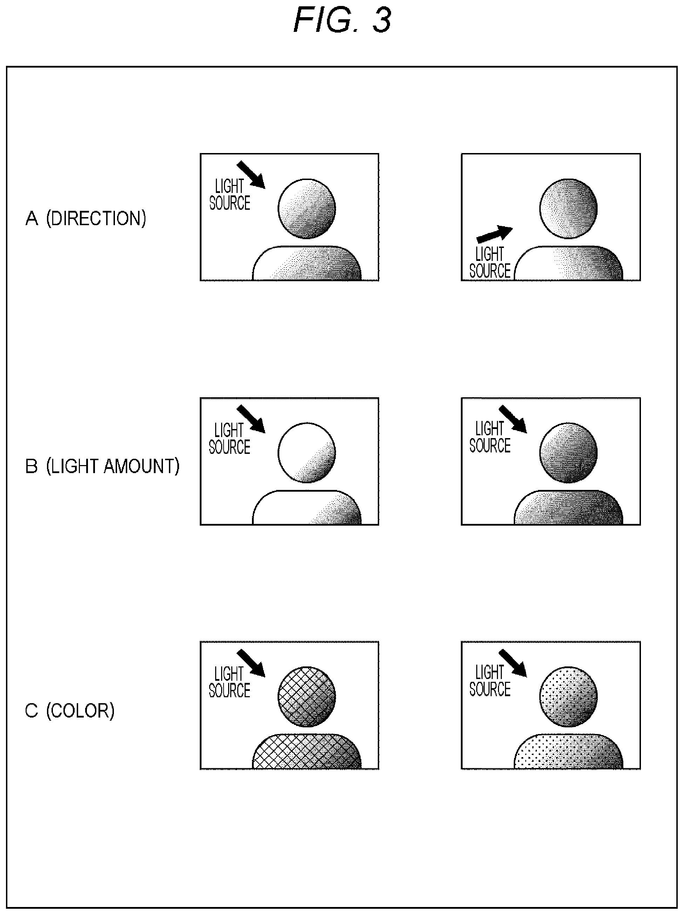

The process P7 is a lighting process of setting a type of a light source in a scene. In the lighting process, for example, a direction (upward/downward) of the light source in the scene is set as illustrated in A of Fig. 3, a light amount (large/small) of the light source in the scene is set as illustrated in B of Fig. 3, or a color of the light source in the scene is set as illustrated in C of Fig. 3.

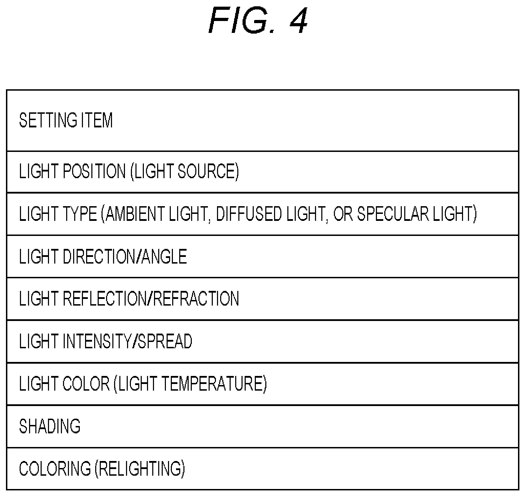

In the lighting process, for example, setting items as illustrated in Fig. 4 are set.

That is, in the lighting process, eight setting items are set, which include light position (light source), light type (ambient light, diffused light, or specular light), light direction/angle, light reflection/refraction, light intensity/spread, light color (color temperature), shading, and coloring (relighting).

Returning to Fig. 1, the process P8 is a rendering process of rendering the scene including the 3D model to which the various settings in the processes P1 to P7 have been applied so that a human can visually recognize the scene.

In each of the above-described processes P1 to P8, manual setting and adjustment by the user for the 3D model and the entire scene are necessary.

In particular, in the process P3 (texture/material process) and the process P7 (lighting step) indicated by the thick frames in Fig. 1, it is necessary to create a real object suitable for a desired scene, such as reflection of the 3D model, texture of the surface, and how a shadow is formed. Furthermore, in the process P6 (animation process) indicated by the thick frame in Fig. 1, it is necessary to create natural and realistic motion without discomfort, such as how clothes flap and permeation of sweat according to a speed of the motion of the 3D model.

As described above, the user needs to manually select the object and motion for generating the desired 3D model, and moreover, manual setting and adjustment by the user are required for creating the real object and motion, which takes time and effort.

### <2. Flow of CG video production to which technology according to present disclosure is applied>

In contrast to the conventional problem of CG video production, in the CG video production to which the technology according to the present disclosure is applied, the object data and the motion data of the 3D model corresponding to a subject of photograph data are selected on the basis of the meta information of the input photograph data (reference image).

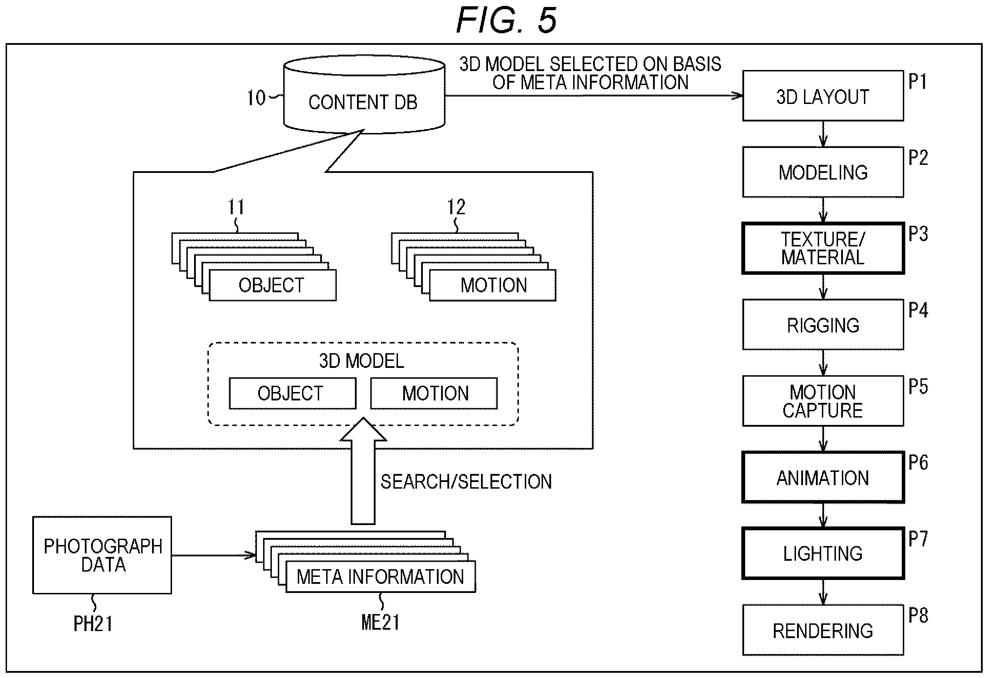

Fig. 5 is a diagram illustrating a flow of CG video production to which the technology according to the present disclosure is applied.

As illustrated in Fig. 5, in the CG video production to which the technology according to the present disclosure is applied, first, photograph data PH21 is input as the reference image selected by the user. The reference image is, for example, an image obtained by capturing a scene desired by the user, an image having an atmosphere similar to the scene desired by the user, or the like. The reference image may be a photographic image taken by the user himself/herself using a camera, or may be a photographic image taken by any other user and stored on a cloud. Furthermore, the reference image is not limited to a photographic image, and may be a 2DCG image produced by a CG creator or the like.

Next, meta information ME21 is extracted from the input photograph data PH21. The meta information ME21 is feature information indicating a feature of a main subject included in the photograph data PH21, environment information indicating an environment in which the subject exists, or the like. For example, the meta information ME21 includes the surface and texture of the 3D model set in the process P3, the type of the light source in the scene set in the process P7, and the movement and center of gravity of the 3D model set in the process P6.

Thereafter, object data and motion data having meta information (similar meta information) similar to the meta information ME21 are searched on the basis of the meta information ME21 as the object data and the motion data of the three-dimensional model corresponding to the subject of the photograph data PH21.

The 3D model (the object data and the motion data) searched on the basis of the meta information ME21 is automatically selected from the content DB 10 (the marketplace), and the user performs production work given in processes P1 to P8 for the selected 3D model. Thereby, in the present embodiment, it is possible to reduce the labor of manually selecting the object data 11 and the motion data 12 for expressing the desired 3D model from the content DB 10 (marketplace).

At this time, the meta information corresponding to the scene desired by the user is reflected in the 3D model automatically selected from the content DB 10. Specifically, the 3D model reflects the surface and texture desired by the user, the type of the light source in the scene desired by the user, the movement and the center of gravity desired by the user, and the like.

As a result, the user can generate the desired 3D model while easily performing the setting and adjustment in the texture/material process, the lighting process, and the animation process that take time and effort, and it is possible to reduce the user's labor for CG video production.

### <3. Configuration and operation of video production system>

Hereinafter, configuration and operation of a video production system of the present embodiment will be described.

### (Outline configuration example of video production system)

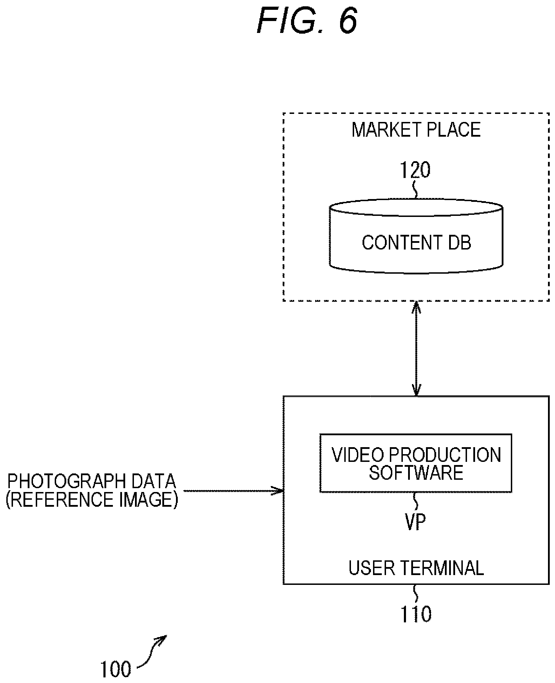

Fig. 6 is a diagram illustrating a schematic configuration example of a video production system according to the present embodiment.

A video production system 100 illustrated in Fig. 6 includes a user terminal 110 and a content DB 120.

The user terminal 110 includes, for example, a computer device (information processing device) such as a personal computer (PC), a tablet terminal, or a smartphone, and includes a central processing unit (CPU), a memory, and the like (not illustrated). Furthermore, the user terminal 110 includes an operation input unit and a display unit (not illustrated) to receive an operation of the user and present various types of information to the user. Moreover, the user terminal 110 includes a communication unit (not illustrated) to communicate with the content DB 120 via a network such as the Internet.

Video production software VP is installed in the user terminal 110, and provides various functions related to 3DCG video production on the user terminal 110.

The content DB 120 accumulates the object data for expressing the 3D model that is available for purchase in the marketplace and the motion data regarding the movement of the 3D model.

The user can access the marketplace from the video production software VP operating on the user terminal 110 and purchase the 3D model (object data and motion data) accumulated in the content DB 120.

In the video production system 100, the user inputs the photograph data (reference image) obtained by capturing the desired scene to the user terminal 110, so that the user can purchase the 3D model corresponding to the subject of the photograph data by the video production software VP. At this time, the user can purchase the 3D model expressed by the object data and the motion data selected on the basis of the meta information of the photograph data.

### (Functional configuration example of video production system)

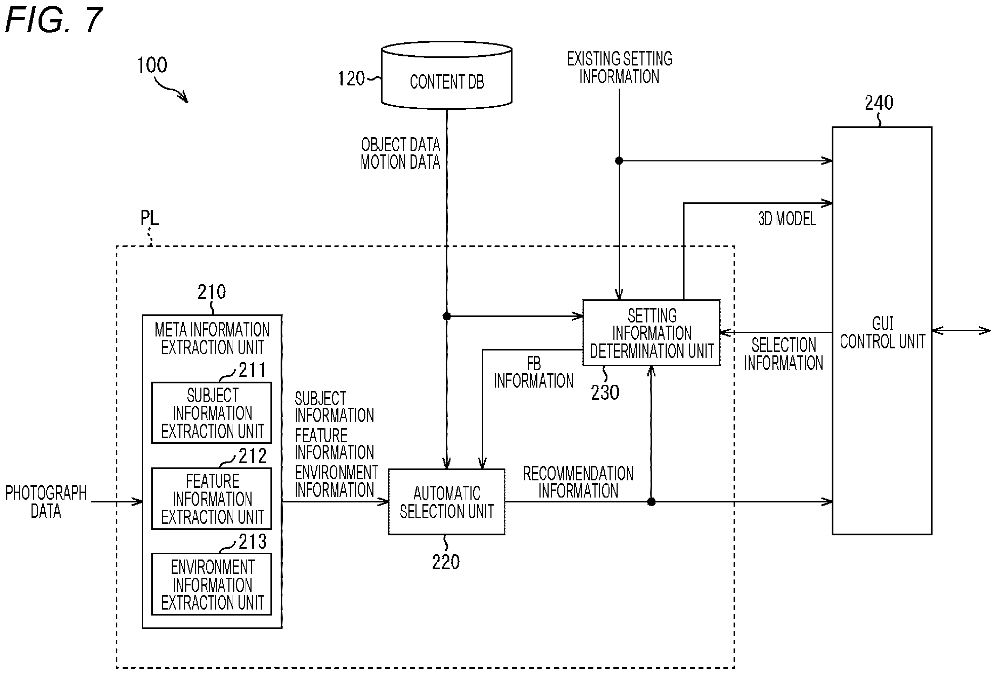

Fig. 7 is a block diagram illustrating a functional configuration example of the above-described video production system 100.

The video production system 100 illustrated in Fig. 7 includes a meta information extraction unit 210, an automatic selection unit 220, a setting information determination unit 230, and a GUI control unit 240.

Functional blocks of the meta information extraction unit 210, the automatic selection unit 220, the setting information determination unit 230, and the GUI control unit 240 are implemented by a program that executes the video production software VP installed in the user terminal 110. In particular, the meta information extraction unit 210, the automatic selection unit 220, and the setting information determination unit 230 may be installed in the user terminal 110 as, for example, plug-in PL of the video production software VP. The plug-in PL may be available for purchase through a marketplace having the content DB 120. Furthermore, the content DB 120 may have a function provided by the plug-in PL.

The meta information extraction unit 210 extracts the meta information from the photograph data input by the user on the basis of at least one of image recognition for the photograph data obtained by capturing the desired scene or attribute information corresponding to the photograph data, for example, and supplies the meta information to the automatic selection unit 220.

The meta information extraction unit 210 includes a subject information extraction unit 211, a feature information extraction unit 212, and an environment information extraction unit 213.

The subject information extraction unit 211 detects the subject in the photograph data by performing object recognition for the photograph data input by the user. Subject information indicating the detected subject is output as the meta information. Here, the subject information based on a result of the object recognition for the photograph data is not limited to being output as the meta information. That is, the subject information extraction unit 211 may output the subject information indicating the subject among attribute information (exchangeable image file format (Exif) data, (international press telecommunications council) IPTC meta data, and the like) included in the photograph data input by the user or attribute information (search keyword information and the like) associated with the photograph data as the meta information.

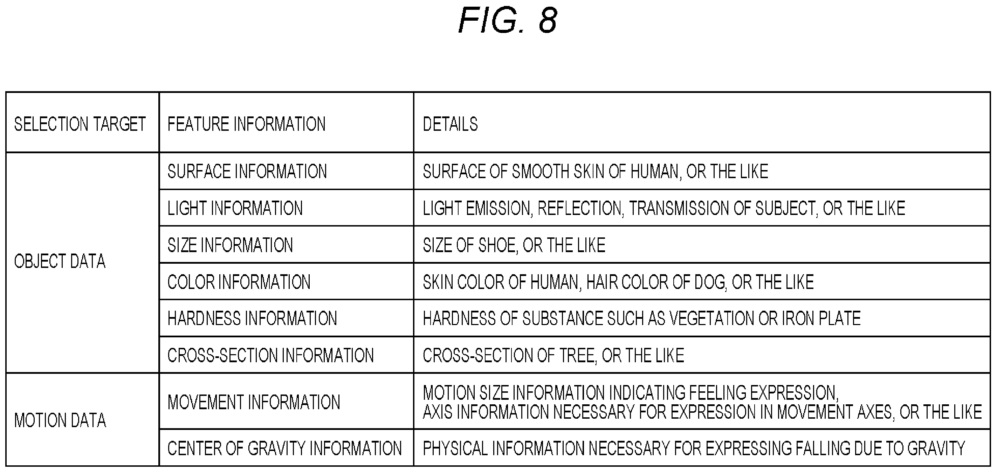

The feature information extraction unit 212 extracts the feature information indicating a feature of the subject in the photograph data by performing object recognition for the photograph data input by the user. Details of the feature information will be described below with reference to Fig. 8. The extracted feature information is output as the meta information. Here, the feature information based on a result of the object recognition for the photograph data is not limited to be output as the meta information. That is, the feature information extraction unit 212 may output the subject information indicating the feature of the subject among the attribute information (Exif data, IPTC meta data, and the like) included in the photograph data input by the user or the attribute information (search keyword information and the like) associated with the photograph data as the meta information.

The environment information extraction unit 213 extracts the environment information indicating the environment where the subject of the photograph data is present by performing image recognition for the photograph data input by the user. The environmental information includes, for example, weather information indicating weather such as sunny, cloudy, and rainy, time information indicating a time zone such as morning, daytime, and evening, shadow information indicating the presence or absence and direction of a shadow formed on the subject by sunlight or the like, and the like. The weather information may be obtained via a network on the basis of position information included in the photograph data. Furthermore, the time information may be specified on the basis of a timestamp included in the photograph data. The extracted environment information is output as the meta information.

The meta information output from the meta information extraction unit 210 in this way is used in the automatic selection unit 220 to select the object data and the motion data of the 3D model corresponding to the subject of the input photograph data.

The automatic selection unit 220 selects at least one of the object data or the motion data of the 3D model corresponding to the subject of the input photograph data from the content DB 120 on the basis of the meta information from the meta information extraction unit 210.

First, the automatic selection unit 220 searches for the 3D model corresponding to the subject represented by the subject information from among the 3D models accumulated in the content DB 120 on the basis of the subject information in the meta information from the meta information extraction unit 210.

Next, the automatic selection unit 220 selects the object data and the motion data having similar meta information to the feature information and the environment information from among the object data and the motion data corresponding to the searched 3D model on the basis of the feature information and the environment information in the meta information from the meta information extraction unit 210. Here, in a case where the searched 3D model is a 3D model expressing a stationary object, only the object data is selected, and in a case where the searched 3D model is a 3D model expressing a moving object, both the object data and the motion data are selected.

Then, the automatic selection unit 220 supplies the selected object data and motion data, and the meta information included therein to the setting information determination unit 230 and the GUI control unit 240 as recommendation information for recommending the object data and the motion data to the user. Note that, in a case where the searched 3D model is a 3D model expressing a stationary object, the automatic selection unit 220 supplies the object data and the meta information included in the object data to the setting information determination unit 230 and the GUI control unit 240 as the recommendation information.

Note that an automatic selection function (recommendation function) of the object data and the motion data in the automatic selection unit 220 may be implemented by learning using artificial intelligence (AI).

The setting information determination unit 230 determines setting information to be applied to the object data and the motion data selected by the automatic selection unit 220 on the basis of selection information corresponding to the selection operation of the user supplied from the GUI control unit 240. The setting information applied to the object data and the motion data is the recommendation information (meta information) supplied from the automatic selection unit 220 or existing setting information indicating setting items prepared in advance.

In a case where the setting information applied to the object data and the motion data is the existing setting information, feedback (FB) information for feeding back the object data and the motion data to which the existing setting information is applied to the automatic selection function in the automatic selection unit 220 is supplied to the automatic selection unit 220.

The setting information determination unit 230 supplies the 3D model expressed by the object data and the motion data to which the determined setting information is applied to the GUI control unit 240.

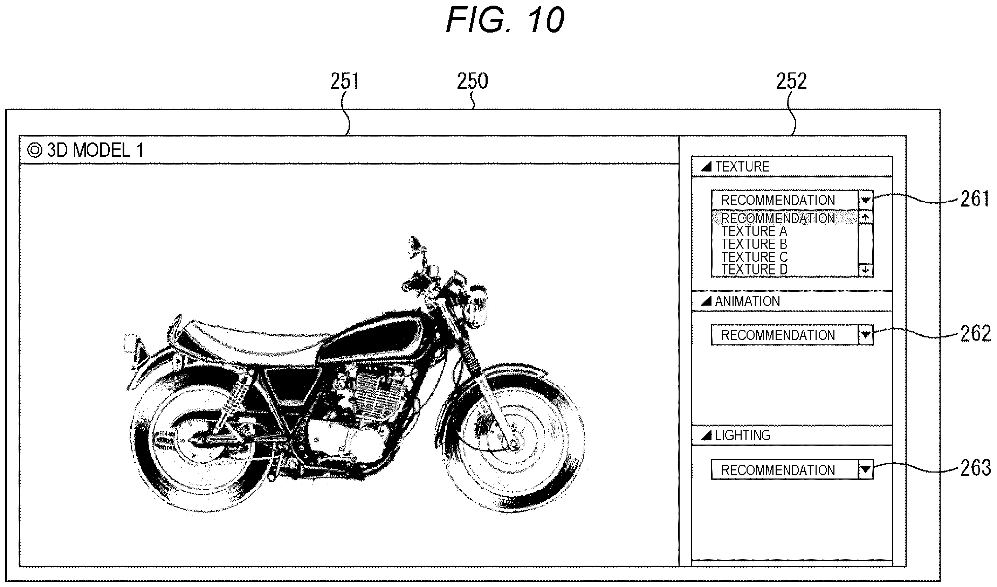

The GUI control unit 240 controls presentation of a GUI on a display unit (not illustrated) included in the user terminal 110. Details of the GUI presented by the GUI control unit 240 will be described below with reference to Fig. 10.

The GUI presented by the GUI control unit 240 includes a GUI part for selecting one of the recommendation information supplied from the automatic selection unit 220 or the existing setting information prepared in advance. The selection information indicating which of the recommendation information or the existing setting information has been selected by the operation of the GUI part by the user is supplied to the setting information determination unit 230.

Furthermore, the GUI presented by the GUI control unit 240 displays (outputs) the 3D model expressed by the object data and the motion data to which the recommendation information or the existing setting information selected by the operation of the GUI part by the user is applied.

### (Example of feature information)

Fig. 8 is a table illustrating an example of feature information of a subject extracted from photograph data input by a user.

In Fig. 8, the feature information is classified and illustrated for each selection target selected on the basis of the feature information.

In the example of Fig. 8, surface information, light information, size information, color information, hardness information, and cross-section information are illustrated as the feature information used for selecting the object data.

The surface information includes information regarding the texture of a surface of the subject, for example, a surface of a smooth skin of a human. The light information includes information regarding a position of the light source with respect to the subject and a light irradiation mode, such as light emission, reflection, and transmission of the subject. The size information includes information indicating a size of a shoe. The color information includes information indicating a skin color of a human, a hair color of a dog, or the like. The hardness information includes information indicating hardness of a substance such as vegetation or an iron plate. The cross-section information includes information indicating a cross-section of a tree or the like.

For example, the setting items that can be set in the material process described with reference to Fig. 2 correspond to the surface information and the light information in Fig. 8, and the object data having similar meta information (setting items) to the surface information and the light information extracted as the feature information is selected.

Furthermore, the setting items that can be set in the lighting process described with reference to Fig. 4 correspond to the light information in Fig. 8, and the object data having similar meta information (setting items) to the light information extracted as the feature information is selected.

Moreover, in the example of Fig. 8, movement information and center of gravity information are illustrated as the feature information used for selection of the motion data.

The movement information includes motion size information indicating feeling expression (fast movement information, dynamic motion such as high jump, static motion opposite thereto, or the like), axis information necessary for expression in each movement axis of an X axis, a Y axis, and a Z axis in the 3DCG space, and the like. The center of gravity information includes physical information necessary for expressing falling of the 3D model due to gravity.

Here, in addition to being searched from the content DB 120, the 3D model may be generated by a method called photogrammetry for generating the 3D model on the basis of the photograph data obtained by capturing the subject from a plurality of angles. In this case, the movement information and the center of gravity information may be extracted on the basis of a plurality of pieces of the photograph data captured by the photogrammetry method.

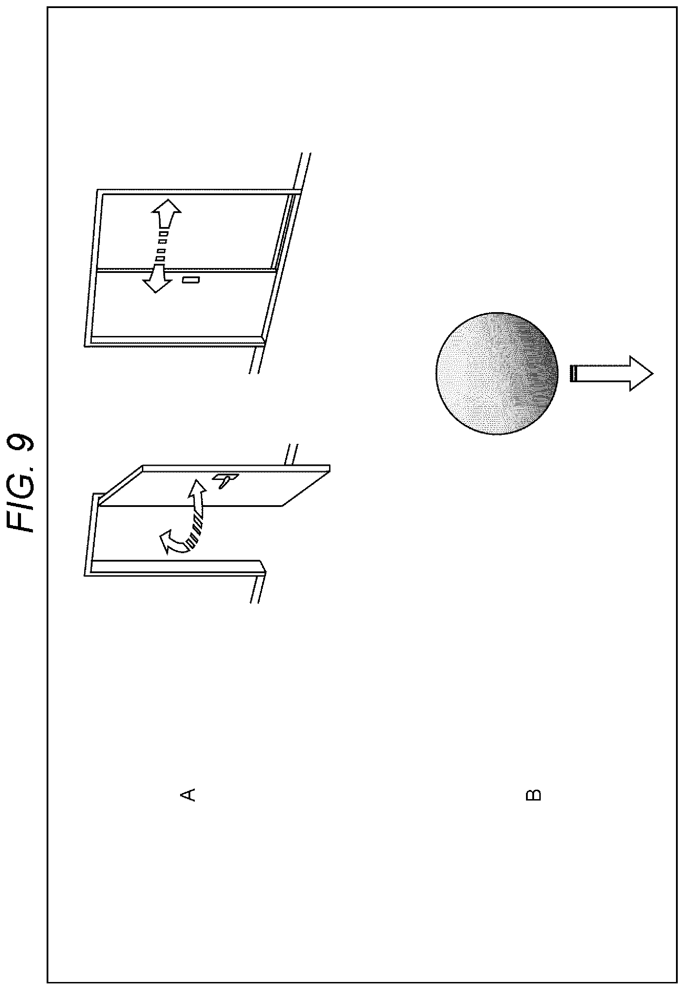

For example, the movement information expressing a feeling (delight, anger, sorrow, or the like) of the subject may be extracted from the content DB 120 by image recognition on the basis of the photograph data. Furthermore, as illustrated in A of Fig. 9, the movement information expressing one-axis rotation of a hinged rotary door or the movement information expressing a sliding operation of a sliding door may be extracted on the basis of a plurality of pieces of the photograph data obtained by capturing a state of opening and closing of a door.

Furthermore, as illustrated in B of Fig. 9, the center of gravity information expressing the free fall of an object may be extracted on the basis of a plurality of pieces of the photograph data obtained by capturing a state of falling of a sphere.

### (Example of GUI provided by video production software)

Fig. 10 is a diagram illustrating an example of a GUI (presented by the GUI control unit 240) provided by the video production software.

In the example of Fig. 10, a 3D model generation screen 250 displayed on a display unit (not illustrated) included in the user terminal 110 is illustrated as the GUI provided by the video production software.

The 3D model generation screen 250 is provided with a 3D model display region 251 and a setting item selection region 252.

The 3D model display region 251 is a region where the 3D model generated by the user is displayed. For example, the 3D model (object data) searched and selected on the basis of the meta information of the photograph data input by the user is displayed in the 3D model display region 251.

The setting item selection region 252 is a region where the setting items selected by the user in each process related to the generation of the 3D model are displayed. In the example of Fig. 10, in the setting item selection region 252, drop-down lists 261, 262, and 263 are displayed as the GUI parts for the user to select the setting items in the respective processes of the texture process, the animation process, and the lighting process.

In the drop-down lists 261, 262, and 263, the setting items selectable in the respective processes are displayed. In the example of Fig. 10, in the drop-down list 261 for selecting the setting item of the texture process, "recommendation" (the recommendation information) and "texture A", "texture B", and "texture C" (the existing setting information prepared in advance) are selectable.

Then, the selection items selected in the respective drop-down lists 261, 262, and 263 are reflected in the 3D model displayed in the 3D model display region 251. That is, in a case where the "recommendation" is selected in each of the drop-down lists 261, 262, and 263, the 3D model displayed in the 3D model display region 251 is the 3D model itself searched and selected on the basis of the meta information of the photograph data input by the user.

Of course, by selecting the setting item other than the "recommendation" in each of the drop-down lists 261, 262, and 263, the user can manually perform setting and adjustment without depending on the meta information of the input photograph data.

### (3D model generation processing)

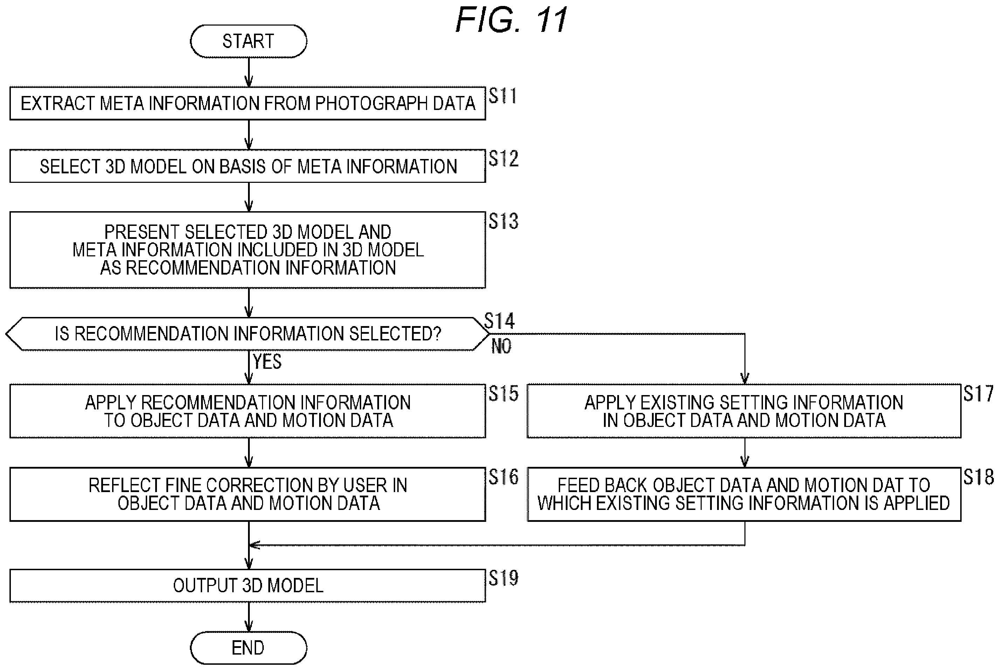

3D model generation processing by the video production system 100 (video production software VP) will be described with reference to the flowchart in Fig. 11. The processing of Fig. 11 is started when, for example, the photograph data obtained by capturing the scene desired by the user is input to the user terminal 110.

In step S11, the meta information extraction unit 210 extracts the meta information from the input photograph data.

In step S12, the automatic selection unit 220 selects the 3D model (object data and motion data) corresponding to the subject of the input photograph data from the content DB 120 on the basis of the meta information from the photograph data.

Hereinafter, processing in steps S13 to S18 is simply executed for each process related to the generation of the 3D model, in particular, for each of the texture/material process, the animation process, and the lighting process.

That is, in step S13, the GUI control unit 240 presents the selected 3D model and the meta information included in the 3D model to the user as the recommendation information.

In step S14, the GUI control unit 240 determines whether or not the recommendation information presented to the user is selected.

In a case where it is determined in step S14 that the recommendation information is selected, the processing proceeds to step S15, and the setting information determination unit 230 determines the recommendation information selected by the user as the setting information to be applied to the object data and the motion data of the 3D model.

Thereafter, in a case where fine correction of the setting item of the process is instructed by the user, the setting information determination unit 230 reflects the fine correction by the user in the object data and the motion data of the 3D model in step S16.

On the other hand, in a case where it is determined in step S14 that the recommendation information is not selected, the processing proceeds to step S17, and the setting information determination unit 230 determines the existing setting information corresponding to the setting item selected by the user as the setting information to be applied to the object data and the motion data of the 3D model.

Thereafter, in step S18, the setting information determination unit 230 feeds back the object data and the motion data to which the existing setting information is applied to the automatic selection function (recommendation function) of the 3D model in the automatic selection unit 220. In a case where the automatic selection function of the 3D model is implemented by learning using AI, it is possible to present the recommendation information more suitable for the user's preference by repeating the generation of the 3D model.

When the processing of steps S13 to S18 is completed for each process related to the generation of the 3D model, the GUI control unit 240 outputs the completed 3D model in step S19.

According to the above processing, the object data and the motion data are automatically selected from the content DB 120 using the meta information extracted from the photograph data. Thereby, the user can generate a desired 3D model while completing the setting and adjustment in each process related to the generation of the 3D model, in particular, in the texture/material process, the animation process, and the lighting process more easily than in the related art, and it is possible to reduce the user's labor for CG video production.

Furthermore, since it is possible to reduce the user's labor for CG video production, it is possible to implement the CG video production with a low budget, leading to production of a new CG creator.

In the above description, the setting items (the meta information included in the object data and the motion data) set in the automatically selected object data and motion data are presented as the recommendation information.

Alternatively, the automatically selected object data or motion data (3D model) itself may be presented as the recommendation information.

Furthermore, the meta information (or the setting items corresponding to the meta data) of the input photograph data used to select the object data or the motion data may be presented as the recommendation information.

### <4. Specific example of 3D model generation>

Hereinafter, a specific example of the 3D model generation by the video production system 100 (video production software VP) will be described.

### (First specific example)

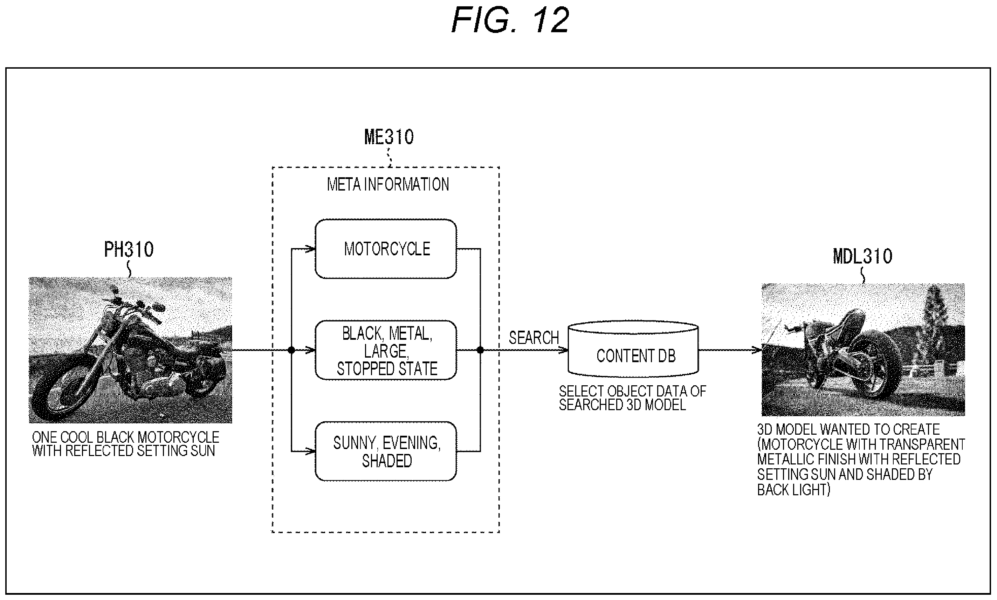

Fig. 12 is a diagram illustrating a first specific example of the 3D model generation.

In the example of Fig. 12, it is assumed that photograph data PH310 having one cool black motorcycle with reflected setting sun taken as the subject is input as a reference image in which the scene desired by the user is captured.

In the video production software VP, meta information ME310 is extracted from input photograph data PH310. In the example of Fig. 12, the subject information indicating that the subject is "motorcycle", the feature information indicating that the features of the motorcycle as the subject are "black", "metal", "large", and "stopped state", and the environment information indicating that the environment in which the motorcycle as the subject is present is "sunny", "evening", and "shaded" are extracted as the meta information ME310.

When the meta information ME310 is extracted, first, the 3D model corresponding to "motorcycle" is searched from the 3D models accumulated in the content DB on the basis of the subject information included in the meta information ME310 in the video production software VP.

Next, the object data having similar meta information to the feature information and the environment information is selected from the object data corresponding to the searched 3D model on the basis of the feature information and the environment information included in the meta information ME310.

As a result, the user can obtain a 3D model MDL310 of the motorcycle with transparent metallic finish with reflected setting sun and shaded by back light as the 3D model reflecting the meta information corresponding to the desired scene, that is, the 3D model that the user wants to create.

Since the meta information corresponding to the scene desired by the user is reflected in the 3D model MDL 310, the user can generate the desired 3D model while easily completing the setting and adjustment in each process related to the generation of the 3D model.

### (Second specific example)

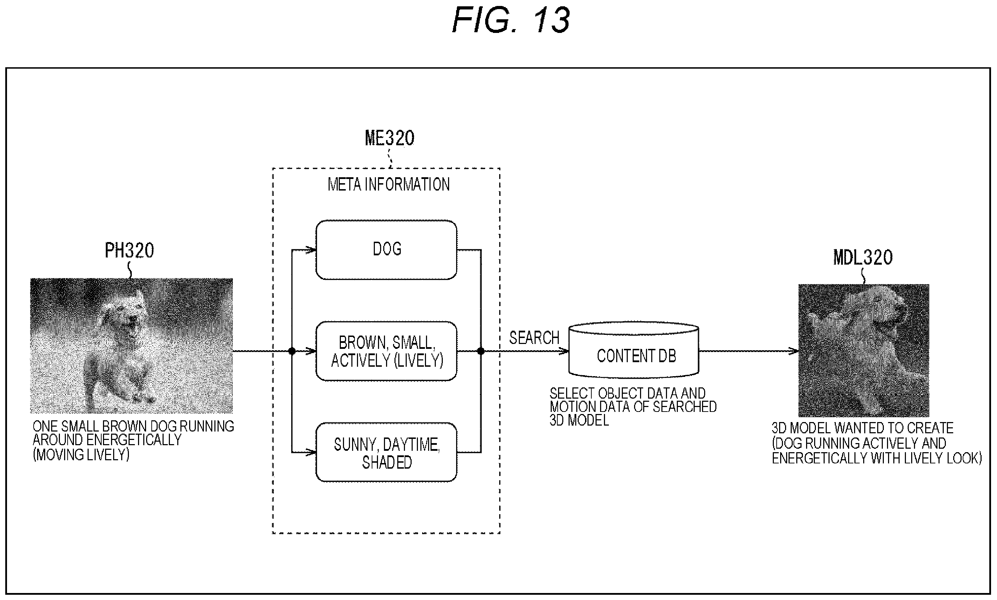

Fig. 13 is a diagram illustrating a second specific example of 3D model generation.

In the example of Fig. 13, it is assumed that photograph data PH320 having one small brown dog running around energetically (moving lively) taken as the subject is input as a reference image in which the scene desired by the user is captured.

In the video production software VP, meta information ME320 is extracted from input photograph data PH320. In the example of Fig. 13, the subject information indicating that the subject is "dog", the feature information indicating that the features of the dog as the subject are "brown", "small", and "actively (lively)", and the environment information indicating that the environment in which the dog as the subject is present is "sunny", "daytime", and "shaded" are extracted as the meta information ME320.

When the meta information ME320 is extracted, first, the 3D model corresponding to "dog" is searched from the 3D models accumulated in the content DB on the basis of the subject information included in the meta information ME320 in the video production software VP.

Next, the object data and the motion data having similar meta information to the feature information and the environment information is selected from the object data and the motion data corresponding to the searched 3D model on the basis of the feature information and the environment information included in the meta information ME320.

As a result, the user can obtain a 3D model MDL320 of the dog running actively and energetically with lively look as the 3D model reflecting the meta information corresponding to the desired scene, that is, the 3D model that the user wants to create.

Since the meta information corresponding to the scene desired by the user is reflected in the 3D model MDL 320, the user can generate the desired 3D model while easily completing the setting and adjustment in each process related to the generation of the 3D model.

The present embodiment is not limited to the above-described specific examples, it is possible to automatically select the object data and the motion data of the 3D model corresponding to the subject of the reference image on the basis of the meta information extracted from any reference image in the video production system 100 (video production software VP) of the present embodiment.

Furthermore, the technology according to the present disclosure is not limited to the production of a 3DCG video, and can also be applied to production of a mixed reality (MR) video in which a 3D model appears in a video (real video) obtained by capturing a real world.

### <5. Configuration example of computer>

The series of processing steps described above can be executed by hardware and also can be executed by software. In a case where the series of processing is executed by software, a program constituting the software is installed in a computer. Here, examples of the computer include a computer incorporated in dedicated hardware, and for example, a general-purpose personal computer capable of executing various functions by installing various programs or the like.

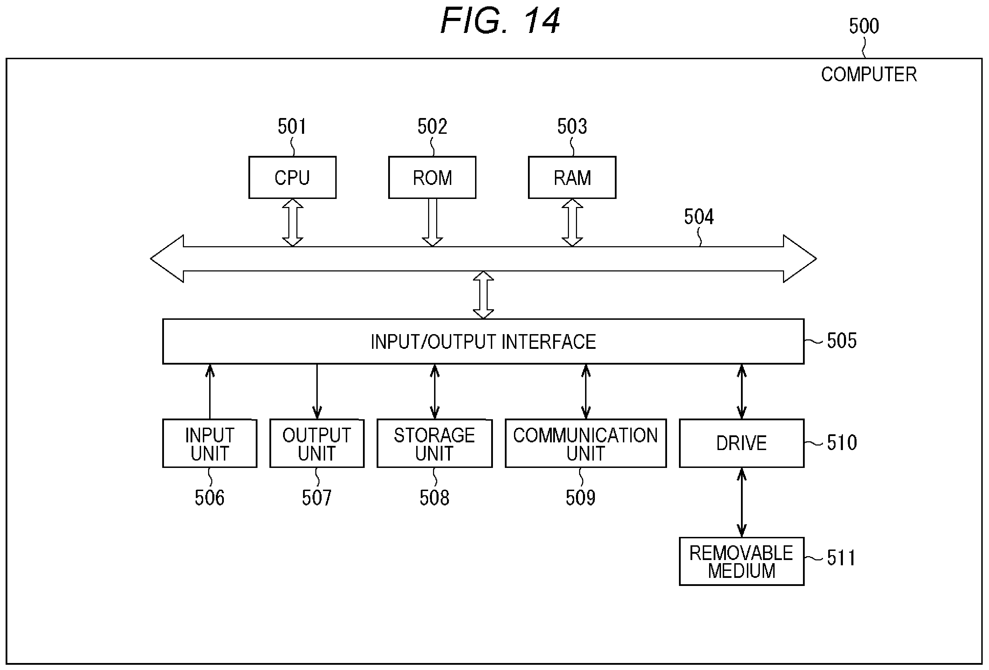

Fig. 14 is a block diagram illustrating a configuration example of hardware of a computer that executes the series of processing described above according to a program.

In the computer, a CPU 501, a read only memory (ROM) 502, and a random access memory (RAM) 503 are mutually connected by a bus 504.

An input/output interface 505 is further connected to the bus 504. An input unit 506, an output unit 507, a storage unit 508, a communication unit 509, and a drive 510 are connected to the input/output interface 505.

The input unit 506 includes a keyboard, a mouse, a microphone, and the like. The output unit 507 includes a display, a speaker, and the like. The storage unit 508 includes a hard disk, a non-volatile memory and the like. The communication unit 509 includes, for example, a network interface and the like. The drive 510 drives a removable medium 511 such as a magnetic disk, an optical disk, a magneto-optical disk, or a semiconductor memory.

In the computer configured as described above, for example, the CPU 501 loads a program stored in the storage unit 508 into the RAM 503 via the input/output interface 505 and the bus 504 and executes the program, whereby the above-described series of processing is performed.

The program executed by the computer (CPU 501) can be provided by being recorded on, for example, a removable medium 511 as a package medium or the like. Furthermore, the program can be provided via a wired or wireless transmission medium such as a local area network, the Internet, or digital satellite broadcasting.

In the computer, the program can be installed in the storage unit 508 via the input/output interface 505 by mounting the removable medium 511 to the drive 510. Furthermore, the program can be received by the communication unit 509 via a wired or wireless transmission medium and installed in the storage unit 508. Other than the above, the programs can be installed into the ROM 502 or the storage unit 508 in advance.

Note that the program executed by the computer may be a program in which processing is performed in time series in the order described in the present specification, or may be a program in which processing is performed in parallel or at necessary timing such as when a call is made.

The embodiments of the present disclosure are not limited to the above-described embodiments, and various modifications can be made without departing from the gist of the present disclosure.

The effects described in the present specification are merely examples and are not limited, and other effects may be provided.

Moreover, the technology according to the present disclosure can have the following configurations.
(1) A program for causing a computer to execute processing including:
   selecting at least one of object data expressing a three-dimensional model corresponding to a subject of an input reference image or motion data related to movement of the three-dimensional model, the object data and the motion data being accumulated in a database, on the basis of meta information of the input reference image.
(2) The program according to (1), including:
   extracting the meta information from the reference image on the basis of at least one of image recognition for the reference image or attribute information corresponding to the reference image; and
   selecting the object data and the motion data on the basis of the extracted meta information.
(3) The program according to (2), including:
   extracting at least one of feature information of the subject or environment information of the reference image as the meta information.
(4) The program according to (3), including:
   selecting the object data on the basis of at least one of surface information, light information, size information, color information, hardness information, or cross-section information of the subject extracted as the feature information.
(5) The program according to (4), in which
   the surface information includes information regarding texture of a surface of the subject.
(6) The program according to (4), in which the light information includes information regarding a position of a light source with respect to the subject and a light irradiation mode.
(7) The program according to (3), including:
   selecting the motion data on the basis of at least one of movement information or center of gravity information of the subject extracted as the feature information.
(8) The program according to (7), in which
   the movement information and the center of gravity information are extracted on the basis of the reference images obtained by capturing the subject from a plurality of angles.
(9) The program according to (3), including:
   selecting the object data on the basis of at least one of weather information or time information extracted as the environment information.
(10) The program according to any one of (2) to (9), including:
   selecting the object data and the motion data having similar meta information to the extracted meta information.
(11) The program according to any one of (2) to (10), including:
   presenting recommendation information used to recommend the selected object data and the selected motion data to a user.
(12) The program according to (11), including:
   presenting the meta information included in the selected object data and the selected motion data as the recommendation information.
(13) The program according to (11), including:
   presenting the selected object data and the selected motion data as the recommendation information.
(14) The program according to any one of (11) to (13), including:
   in a case where the recommendation information is selected by the user in a GUI provided to the user, outputting the object data and the motion data to which the recommendation information is applied.
(15) The program according to (14), including:
   in a case where existing setting information prepared in advance and different from the recommendation information is selected by the user in the GUI,
   feeding back the object data and the motion data to which the existing setting information is applied to a selection function of the object data and the motion data.
(16) The program according to (15), in which
   the selection function is implemented by learning using artificial intelligence (AI).
(17) The program according to (15), in which
   the GUI includes a GUI part used to select the recommendation information or the existing setting information.
(18) The program according to any one of (14) to (17), in which
   the GUI is provided by video production software using the three-dimensional model.
(19) An information processing method, in which
   an information processing device
   selects at least one of object data expressing a three-dimensional model corresponding to a subject of an input reference image or motion data related to movement of the three-dimensional model, the object data and the motion data being accumulated in a database, on the basis of meta information of the input reference image.
(20) An information processing device including:
   an automatic selection unit configured to select at least one of object data expressing a three-dimensional model corresponding to a subject of an input reference image or motion data related to movement of the three-dimensional model, the object data and the motion data being accumulated in a database, on the basis of meta information of the input reference image.

### REFERENCE SIGNS LIST

- 100: Video production system
- 110: User terminal
- 120: Content DB
- 210: Meta information extraction unit
- 220: Automatic selection unit
- 230: Setting information determination unit
- 240: GUI control unit
- VP: Video production software

## Claims

1. A program for causing a computer to execute processing comprising:
selecting at least one of object data expressing a three-dimensional model corresponding to a subject of an input reference image or motion data related to movement of the three-dimensional model, the object data and the motion data being accumulated in a database, on a basis of meta information of the input reference image.

2. The program according to claim 1, comprising:
extracting the meta information from the reference image on a basis of at least one of image recognition for the reference image or attribute information corresponding to the reference image; and
selecting the object data and the motion data on a basis of the extracted meta information.

3. The program according to claim 2, comprising:
extracting at least one of feature information of the subject or environment information of the reference image as the meta information.

4. The program according to claim 3, comprising:
selecting the object data on a basis of at least one of surface information, light information, size information, color information, hardness information, or cross-section information of the subject extracted as the feature information.

5. The program according to claim 4, wherein
the surface information includes information regarding texture of a surface of the subject.

6. The program according to claim 4, wherein the light information includes information regarding a position of a light source with respect to the subject and a light irradiation mode.

7. The program according to claim 3, comprising:
selecting the motion data on a basis of at least one of movement information or center of gravity information of the subject extracted as the feature information.

8. The program according to claim 7, wherein
the movement information and the center of gravity information are extracted on a basis of the reference images obtained by capturing the subject from a plurality of angles.

9. The program according to claim 3, comprising:
selecting the object data on a basis of at least one of weather information or time information extracted as the environment information.

10. The program according to claim 2, comprising:
selecting the object data and the motion data having similar meta information to the extracted meta information.

11. The program according to claim 2, comprising:
presenting recommendation information used to recommend the selected object data and the selected motion data to a user.

12. The program according to claim 11, comprising:
presenting the meta information included in the selected object data and the selected motion data as the recommendation information.

13. The program according to claim 11, comprising:
presenting the selected object data and the selected motion data as the recommendation information.

14. The program according to claim 11, comprising:
in a case where the recommendation information is selected by the user in a GUI provided to the user, outputting the object data and the motion data to which the recommendation information is applied.

15. The program according to claim 14, comprising:
in a case where existing setting information prepared in advance and different from the recommendation information is selected by the user in the GUI,
feeding back the object data and the motion data to which the existing setting information is applied to a selection function of the object data and the motion data.

16. The program according to claim 15, wherein
the selection function is implemented by learning using artificial intelligence (AI).

17. The program according to claim 15, wherein
the GUI includes a GUI part used to select the recommendation information or the existing setting information.

18. The program according to claim 14, wherein
the GUI is provided by video production software using the three-dimensional model.

19. An information processing method, wherein
an information processing device
selects at least one of object data expressing a three-dimensional model corresponding to a subject of an input reference image or motion data related to movement of the three-dimensional model, the object data and the motion data being accumulated in a database, on a basis of meta information of the input reference image.

20. An information processing device comprising:
an automatic selection unit configured to select at least one of object data expressing a three-dimensional model corresponding to a subject of an input reference image or motion data related to movement of the three-dimensional model, the object data and the motion data being accumulated in a database, on a basis of meta information of the input reference image.
